(19) Europäisches Patentamt
European Patent Office
Office européen des brevets

(11) **EP 3 016 245 B1**

(12) **EUROPÄISCHE PATENTSCHRIFT**

(45) Veröffentlichungstag und Bekanntmachung des Hinweises auf die Patenterteilung:
**14.06.2017 Patentblatt 2017/24**

(51) Int Cl.:
*H02K 1/02* *(2006.01)* *H02K 15/02* *(2006.01)*

(21) Anmeldenummer: **14191083.6**

(22) Anmeldetag: **30.10.2014**

(54) **Verfahren zur Herstellung eines Rotors sowie eine Elektromaschine**

Method for producing a rotor and an electric machine

Procédé de fabrication d'un rotor et machine électrique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**04.05.2016 Patentblatt 2016/18**

(73) Patentinhaber: **Rheinisch-Westfälische Technische Hochschule (RWTH) Aachen 52056 Aachen (DE)**

(72) Erfinder:
• **Lange, Tobias 52064 Aachen (DE)**

• **De Doncker, Univ.-Prof. Dr. ir. Dr. h. c. Rik W. 3000 Leuven (BE)**
• **Schenk, Mareike 52076 Aachen (DE)**
• **Stefan, Koschik 52066 Aachen (DE)**

(74) Vertreter: **Laufhütte, Dieter Lorenz Seidler Gossel Rechtsanwälte Patentanwälte Partnerschaft mbB Widenmayerstraße 23 80538 München (DE)**

(56) Entgegenhaltungen:
**WO-A1-2008/006719 WO-A2-2014/125104 US-A- 5 684 352**

**Beschreibung**

Die Erfindung betrifft ein Verfahren zur Herstellung eines Rotors für eine elektrische Maschine, wobei der Rotor aus wenigstens einem Elektroblech aufgebaut wird.

Der Rotor einer elektrischen Maschine wird bei einem herkömmlichen Maschinenentwurf aus magnetisch leitfähigem Blech gefertigt, auch als Elektroblech bezeichnet. Die magnetische Permeabilität des Bleches wird abgesehen von Stanzeffekten und Laserschnitten an Kanten der Blechschnitte als homogen betrachtet. Jedoch lassen sich Streuflüsse, d.h. unerwünschte Flusskomponenten während des Maschinenbetriebes, nicht immer vermeiden, da die Bleche auch mechanischen Anforderungen genügen müssen. Das Auftreten dieser Streuflüsse ist unabhängig vom tatsächlichen Maschinentyp unerwünscht, d.h. unabhängig davon ob der Rotor für eine Synchronmaschine, Synchronreluktanzmaschine oder eine Asynchronmaschine bestimmt ist.

Reluktanzsynchronmaschinen werden auf Grund ihrer hohen Robustheit und auf Grund der hohen Effizienz besonders bei hohen Drehzahlen eingesetzt. Da in Relunktanzsynchronmaschinen Stege zur mechanischen Stabilisierung des Rotors berücksichtigt werden, entstehen hier erhebliche magnetische Streupfade. Die magnetische Leitfähigkeit des Rotors wird maximiert, um die magnetische Ausnutzung des Eisenmaterials zu maximieren und die Stromeregung zu minimieren. Dies hat zur Folge, dass ebenso die Stege gute magnetische Leiter darstellen. Zur Reduktion dieses magnetisch unerwünschten Effekts werden die Stege üblicherweise bis zur mechanischen Belastungsgrenze minimiert. Weitere Verbesserungen sind vorerst nicht möglich.

Erste Ansätze verfolgen in Forschungsprojekten die explizite Schädigung des Materials durch Laserschneiden, was insbesondere in der Massenproduktion teuer ist und einen hohen Zeitaufwand bedeutet. Es ist daher wünschenswert, alternative Verfahren zur Rotorfertigung aufzuzeigen, die nicht auf einen Laserschnitt angewiesen sind.

Ähnlich wie bei der Reluktanzmaschine entstehen auch bei Synchronmaschinen mit konzentrierten Wicklungen, wie z. B. bei einer 12 Nut/10-poligen Maschine, auf Grund der Durchflutungsverteilung (MMF) subharmonische Feldkomponenten. Diese erzeugen auf Grund der hohen Eindringtiefe im Material bei niedriger Frequenz hohe Verluste im Rotor. Speziell die Magnetverluste werden hierdurch maßgeblich bestimmt. Zur Vermeidung von Verlusten können Flussbarrieren in den Rotor eingearbeitet werden, welche die subharmonischen Feldkomponenten erheblich reduzieren. Ein Verfahren zur Segmentierung und Reduktion von subharmonischen Feldkomponenten ist bereits aus der DE 10 2008 054 284 A1 bekannt.

Unerwünschte Streuflüsse können ebenfalls bei bestimmten Rotorgeometrien für Asynchronmaschinen auftreten, insbesondere bei Konstruktionen, bei denen die notwendigen Leiter durch Rotornuten aufgenommen werden. Bei Maschinen kleinerer Leistungsklassen erfolgt das Einbringen der Leiter häufig durch Spritzgussverfahren mit Aluminium oder Kupfer, wobei hierzu geschlossene Rotornuten zur Vereinfachung des Spritzgussverfahrens bevorzugt werden. Zudem erhöht eine geschlossene Rotornut die mechanische Festigkeit, welche insbesondere für Maschinen hoher Drehzahl, wie z. B. Spindelantriebe oder Fräsen, notwendig ist. Elektromechanisch erhöht eine geschlossene Rotornut im Vergleich zu offenen Rotornuten jedoch auch nachteilig den Streufluss des Feldes, insbesondere durch den resultierenden Steg, den die geschlossene Nut ausbildet. Durch den Streufluss wird das Kippmoment der Asynchronmaschine nachteilig reduziert. Ist eine geschlossene Rotornut auf Grund der mechanischen oder fertigungstechnischen Anforderungen notwendig, lässt sich der Streuflusspfad durch Designeingriffe zunächst nicht beeinflussen.

Aus der US 5,684,352 ist ein Verfahren zur thermischen Behandlung eines Permanentmagnetrotors bekannt. Hierbei sollen gezielt Bereiche um die Rotorwelle entmagnetisiert werden, um das Drehmomentverhalten der Maschine zu optimieren. Nach der thermischen Erwärmung wird der gesamte Blechschnitt in Wasser abgekühlt, sodass sich ein Austenit-Gitter einstellt.

Ein ähnliches Verfahren ist aus der WO 2008/006719 A1 bekannt, das gezielt Bereiche der Blechschnitte um die Rotorwelle thermisch behandelt. Ziel dieses Verfahren ist die Verwendung magnetisch leitender Rotorwellen.

Ein weiteres Verfahren ist aus der WO 2014/125104 bekannt, die ebenfalls eine thermische Behandlung eines Rotorblechpaketes vorschlägt.

Die der Erfindung zu Grunde liegende Aufgabe besteht darin, ein geeignetes Herstellungsverfahren aufzuzeigen, das die nachteiligen Streuflusseffekte während des Maschinenbetriebs zu reduzieren weiß.

Gelöst wird diese Aufgabe durch ein Verfahren gemäß den Merkmalen des Anspruchs 1. Das erfindungsgemäße Verfahren sieht nunmehr vor, dass ein aus wenigstens einem Elektroblech gefertigter Rotor bereichsweise thermisch behandelt wird, um die magnetische Permeabilität des Elektrobleches gezielt im behandelten Bereich zu modifizieren. Insbesondere wird dadurch auch die Sättigungsfeldstärke für diesen Bereich deutlich reduziert.

Durch die gezielte Modifikation der magnetischen Leitfähigkeit des Elektrobleches an den relevanten Stellen des Blechs kann das unerwünschte Auftreten von Streuflüssen in diesen Bereichen verringert oder gar verhindert werden. Dadurch lässt sich insgesamt der Maschinenbetrieb optimieren, was sich beispielsweise durch eine Erhöhung des Wirkungsgrades der Maschine zeigt, d.h. durch eine Erhöhung des resultierenden Drehmomentes bei konstanter Stromaufnahme oder eine Verringerung des Stroms bei konstantem Drehmoment.

Der Rotor wird üblicherweise aus einem Elektroblech gestanzt, wobei einzelne Blechschnitte anschließend vorzugsweise in axialer Richtung gestapelt werden.

Je nach Rotortyp wird die gewünschte Rotorgeometrie durch das Vorsehen von Ausnehmungen, beispielsweise in Form von Flusssperren oder Nuten, erstellt, insbesondere durch Ausstanzen. Bei der resultierenden Rotorgeometrie entstehen Stege im Bereich der Flusssperren bzw. Nuten, die aufgrund der magnetischen Leitfähigkeit des Elektrobleches zu unerwünschten Streupfaden führen. Die gezielte thermische Behandlung dieser ausgebildeten Stege kann die entstehenden Streueffekte entscheidend stören.

Beispielsweise hängt die Drehmomententwicklung einer Maschine maßgeblich vom Maschinenfluss und den Streuflüssen innerhalb der Maschine ab. Bei Relunktanzsynchronmaschinen entsteht auf Grund der Rotorkonfiguration ein Streuflusspfad über Stege im Flusssperrbereich, welche aber zur mechanischen Stabilisierung des Rotors benötigt werden. Da diese Stege aufgrund des Stanzvorgangs ebenfalls aus dem weichmagnetischen Material bestehen, zeichnen sich diese durch gute magnetische Leitfähigkeit aus, so dass die nachteiligen Streuflusspfade über die Stege verlaufen. Durch die Verringerung der magnetischen Permeabilität im Stegbereich werden diese Streupfade effektiv gestört. Die benötigte magnetische Permeabilität kann effizient durch eine punktuelle oder bereichsweise Wärmebehandlung der Stege erreicht werden.

Ähnliches gilt bei einer Rotorgeometrie für Asynchronmaschinen, bei der geschlossene Nuten für die Aufnahme der Leiterstäbe verwendet werden. Die geschlossenen Nuten der Rotorgeometrie bilden ebenfalls am Rotorumfang entsprechende Stege aus dem weichmagnetischen Material aus, die bisher zu den unerwünschten Streuflusspfaden führten. Durch gezielte Behandlung dieser ausgebildeten Stege am Rotorumfang kann der Effekt der Streuflüsse verringert werden, so dass der Motorbetrieb im Ganzen optimiert werden kann.

Auch bei Synchronmaschinen entstehen auf Grund der Durchflutungsverteilung subharmonische Feldkomponenten, die durch die hohe Eindringtiefe im Material bei niedriger Frequenz hohe Verluste im Rotor bewirken. Durch gezielte thermische Behandlung des verwendeten Elektroblechs an vordefinierten Stellen lassen sich auch diese Effekte wirksam bekämpfen und minimieren.

Die Modifikation der magnetischen Permeabilität wird durch eine thermisch bedingte Änderung der Kristallstruktur des verwendeten Elektroblechs erreicht. Durch gesteuerte Hitzeeinwirkung auf den zu behandelnden Bereich wird vorzugsweise ein Übergang von einer Kristallstruktur mit höherer magnetischer Leitfähigkeit in eine Kristallstruktur mit geringerer Leitfähigkeit erzwungen. Durch anschließendes Abkühlen, insbesondere durch Durchlaufen eines thermischen Prozesses, des behandelten Blechabschnittes wird die Struktur nach dem Eisen-Kohlenstoff-Diagramm in ein verändertes Kristallgitter überführt. Vorzugsweise wird der zu behandelnde Bereich über einen vordefinierten Zeitraum stark erhitzt und anschließend abgeschreckt, insbesondere unter Beachtung der kritischen Abkühlgeschwindigkeit.

Zur Abkühlung bzw. Durchlaufen des thermischen Profils dient unter anderem Wasser, dem gegebenenfalls entsprechende Zusätze beigemengt werden können, die die Oberflächenspannung des Wassers verändern. Als weitere Abschreckmedien sind Öl, Salzbad, wässrige Polymerlösungen (z. B. Polyvinylpyrrolidon), Luft oder Gase, z. B. Stickstoff oder Argon, vorstellbar.

Denkbar ist es, dass durch die Wärmebehandlung eine martensitische Härtung erreicht wird. Das ursprüngliche Kristallgefüge wird vorzugsweise in ein Martensit, Bainit bzw. Austenit-Ferrit-Gefüge gewandelt. Die Kristallgefüge weisen im Gegensatz zum ursprünglichen Alpha-Gitter eine sehr geringe magnetische Permeabilität und niedrige Sättigungsfeldstärke auf. Der magnetische Widerstand wird in diesem Bereich stark erhöht und der Streufluss nimmt ab.

Für die ausreichende Erhitzung des Elektroblechs können unterschiedliche Methoden zielführend sein. Grundsätzlich ist auch eine Kombination der nachfolgenden Methoden denkbar. Das Elektroblech kann vorzugsweise mittels offener Flamme erhitzt werden oder durch direkte bzw. indirekte Kontakterwärmung auf die notwendige Temperatur gebracht werden.

Alternativ oder zusätzlich besteht die Möglichkeit der Induktionserwärmung oder die Erhitzung mittels resistiver Erwärmung durch Zuführen von elektrischer Energie.

Die gewünschten magnetische Eigenschaften werden vorzugsweise dann erzielt, wenn der zu behandelnde Rotorbereich auf mindestens 900°, vorzugsweise mindestens 1000°, idealerweise auf einen Temperaturbereich zwischen 900° und 1100° erhitzt wird, um die Kristallstruktur des Elektrobleches in ein Austenitgitter zu wandeln. Der Temperaturbereich ist abhängig von der verwendeten Legierung für da Elektroblech. Der angegebene Temperaturbereich ist für SI-Stahl optimiert.

Zur Vermeidung von Schäden an der übrigen Rotorstruktur werden erfindungsgemäß benachbarte Rotorabschnitte, deren Permeabilität nicht modifiziert werden soll, während der thermischen Behandlung gekühlt.

Die Erfindung betrifft des Weiteren einen Rotor für eine elektrische Maschine, insbesondere eine Synchronmaschine, Synchronrelunktanzmaschine oder eine Asynchronmaschine, wobei der Rotor aus wenigstens einem Elektroblech besteht, das sich in gewissen Bereichen durch eine abweichende magnetische Permeabilität auszeichnet, insbesondere zeichnen sich ausgebildete Stege der Rotorgeometrie durch eine abweichende, insbesondere geringere Permeabilität aus. Der erfindungsgemäße Rotor ist idealerweise gemäß dem erfindungsgemäßen Verfahren bzw. einer vorteilhaften Ausgestaltung des Verfahrens hergestellt, so dass sich für den Rotor offenbar dieselben Vorteile und Eigenschaften wie für das erfindungsgemäße Verfahren ergeben.

Neben dem Rotor betrifft die vorliegende Erfindung zudem eine elektrische Maschine, insbesondere eine Synchronmaschine, Synchronreluktanzmaschine oder eine Asynchronmaschine mit einem Rotor gemäß der vorliegenden Erfindung. Aufgrund des Rückbezuges zum erfindungsgemäßen Rotor ist es offensichtlich, dass die voranstehend diskutierten Vorteile und Eigenschaften des Rotors bzw. des Verfahrens uneingeschränkt für das Verhalten der elektrischen Maschine gelten, so dass auf eine Beschreibung zur Vermeidung von Wiederholungen verzichtet wird.

Weitere Vorteile und Eigenschaften der Erfindung werden im Folgenden anhand mehrerer Zeichnungen detailliert beschrieben. Es zeigen:

Fig. 1:     ein Eisen-Kohlenstoff-Diagramm von Stählen,

Fig. 2:     ein Zeit-Temperatur-Diagramm zur Verdeutlichung der Kristallbildung,

Fig. 3:     ein Spannungs-Dehnungs-Diagramm zur Verdeutlichung des Arbeitsbereichs des erfindungsgemäßen Rotors,

Fig. 4:     ein Schaubild der beiden Ring-Proben,

Fig. 5:     eine mikroskopische Aufnahme eines behandelten/nichtbehandelten Elektroblechs,

Fig. 6:     ein Diagramm zur Verdeutlichung des Flussverlaufes der wärmebehandelten und unbehandelten Ringproben gemäß Figur 4,

Fig. 7:     eine Diagrammdarstellung der Permeabilitätszahl in Abhängigkeit der Flussdichte,

Fig. 8:     ein Teilsegment der erfindungsgemäßen Synchronreluktanzmaschine,

Fig. 9:     die Darstellung der Figur 8 mit hinterlegter Flussdichteverteilung während des Maschinenbetriebes ohne vorherige Wärmebehandlung der Rotorstege,

Fig. 10:     die Darstellung der Figur 8 mit hinterlegter Flussdichteverteilung während des Maschinenbetriebes nach erfolgreicher Wärmebehandlung der Rotorstege,

Fig. 11:     ein Diagramm zur Verdeutlichung des Drehmomentverlaufes einer Rotordrehung des unbehandelten Blechs gemäß Figur 9,

Fig. 12:     ein Diagramm zur Verdeutlichung des Drehmomentverlaufes einer Rotordrehung des wärmebehandelten Blechs gemäß Figur 10,

Fig. 13:     ein Detailausschnitt eines Rotors einer Asynchronmaschine mit geschlossener und offener Rotornut und

Fig. 14:     eine Darstellung einer Synchronmaschine mit 12 Nuten und 10 Polen.

Die Drehmomententwicklung einer Maschine hängt maßgeblich vom Maschinenfluss und den Streuflüssen innerhalb der Maschine ab. In Reluktanz- und Permanentmagnetsynchronmaschinen entsteht aufgrund der Rotorkonfiguration ein Streuflusspfad über Stege, welche zur mechanischen Stabilisierung des Rotors benötigt werden. Diese Stege werden meist durch die mechanische Belastung definiert und sind im magnetischen Entwurf der Maschine in diesem Ausmaß unerwünscht. Ziel ist daher bisher, die Stege so schmal und dünn wie möglich auszugestalten, so dass der Streuflusspfad minimiert wird. Da die Rotoren aus einem Elektroblech gestanzt werden, sind auch die unerwünschten Stege sehr gute magnetische Leiter. Zur Reduktion des Streuflusses kann der Steg verschmälert werden, was jedoch die mechanische Belastbarkeit reduziert. Bei dieser Erfindung ist die Verringerung der magnetischen Permeabilität der gewählte Ansatz, diese Streupfade effektiv zu stören.

Dies kann durch eine punktuelle Wärmebehandlung dieser Stege erreicht werden. Hierzu werden die Rotorstege stark erhitzt, beispielsweise via Flamme, Induktionsheizung, resistive Erhitzung durch Strom oder Kontakthitze, und im Anschluss durch Durchlaufen eines thermischen Profils abgekühlt.

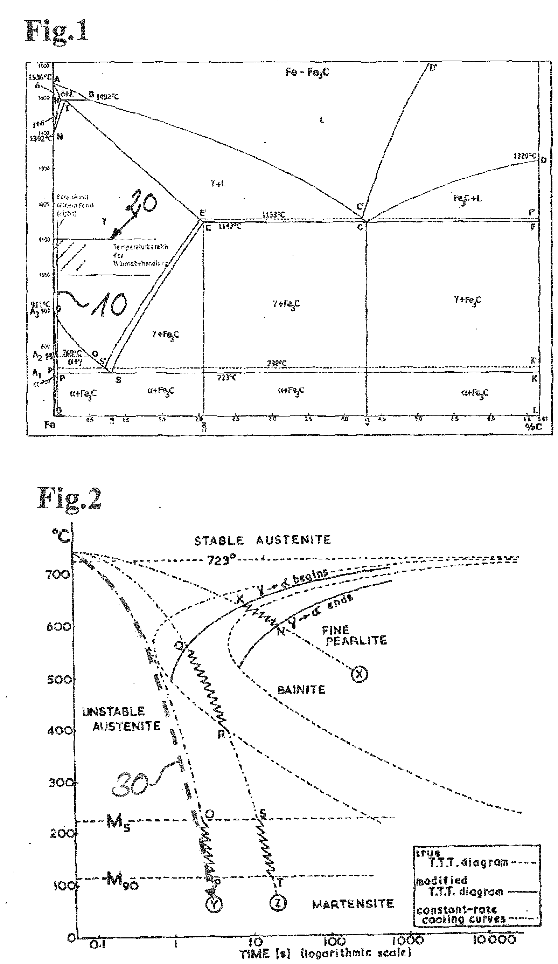

Zur Verdeutlichung der Phasenzusammensetzung bei Eisen wird auf das in Figur 1 abgebildete Eisen-Kohlenstoff-Diagramm (EKD) verwiesen, das ein Gleichgewichtsschaubild für das binäre System Eisen-Kohlenstoff darstellt, aus dem sich in Abhängigkeit vom Kohlenstoffgehalt und der Temperatur die Phasenzusammensetzung ablesen lässt. Auf der x-Achse werden die Massenprozente des Kohlenstoffs aufgetragen, auf der y-Achse die Temperatur. Die Linien stellen die zu anderen Temperaturen verschobenen Haltepunkte bzw. Knickpunkte dar und grenzen die einzelnen Phasenfelder voneinander ab. Die signifikanten Punkte werden mit Buchstaben gekennzeichnet.

Der Linienzug ABCD stellt die Liquiduslinie dar, oberhalb dieser ist die Legierung flüssig, der Linienzug AHIECF entspricht der Soliduslinie, unterhalb der die Legierung komplett erstarrt ist. In dem Temperaturintervall zwischen der Liquidus- und Solidustemperatur hat die Legierung eine breiige Konsistenz und besteht aus Restschmelze, $\delta$-Eisen, $\gamma$-Eisen und Zementit (Fe3C) in wechselnden Konzentrationen und Mengenverhältnissen. Wird bei der Abkühlung der Legierung die Liquiduslinie unterschritten, so beginnt die Primärkristallisation aus der Schmelze.

Aufgrund der verschiedenen allotropen Modifikationen des Eisens bilden sich je nach Kohlenstoffgehalt verschiedene Phasen. Das Eisen bildet verschiedene Einlagerungsmischkristalle $\delta$-, $\gamma$- und $\alpha$-Mischkristalle (MK) mit verschiedenen Löslichkeiten für Kohlenstoff. Das verwendete Elektroblech zur Rotorherstellung befindet sich im Bereich mit reinem Ferrit, d.h. $\alpha$-Ferrit, der in der Diagrammdarstellung mit dem Bezugszeichen 10 gekennzeichnet ist.

Die Wärmebehandlung der Rotorstege erfolgt mit einer Temperatur innerhalb des Temperaturbereichs 20, der zwischen 1000° und 1100° Celsius liegt. Während der Wärmebehandlung (z. B. martensitische Härtung), wandelt sich das Kristallgefüge des Elektroblechs in den behandelten Abschnitten in Martensit, Bainit bzw. eine Austenit-Ferrit-Gefüge. Die Kristallgefüge weisen im Gegensatz zum reinen α-Gitter (Ferrit) eine sehr geringe magnetische Permeabilität und niedrige Sättigungsfeldstärke auf. Der magnetische Widerstand wird so in den Stegen stark reduziert und der Streufluss minimiert.

Während das Material in den zu bearbeitenden Bereichen kurz erhitzt wird bis sich ein Austenitgitter bildet, muss das umgebende Material gekühlt werden, um Schädigungen zu vermeiden. Der zeitliche Ablauf bestimmt den Übergang der Gitterstruktur und das resultierende Gitter. Der Abschreckvorgang sollte daher einen Abkühlverlauf annehmen, wie er in Figur 2 durch die Kennlinie 30 markiert ist. Bei dem gewählten Temperaturverlauf 30 können α-Gitterstrukturen vermieden werden.

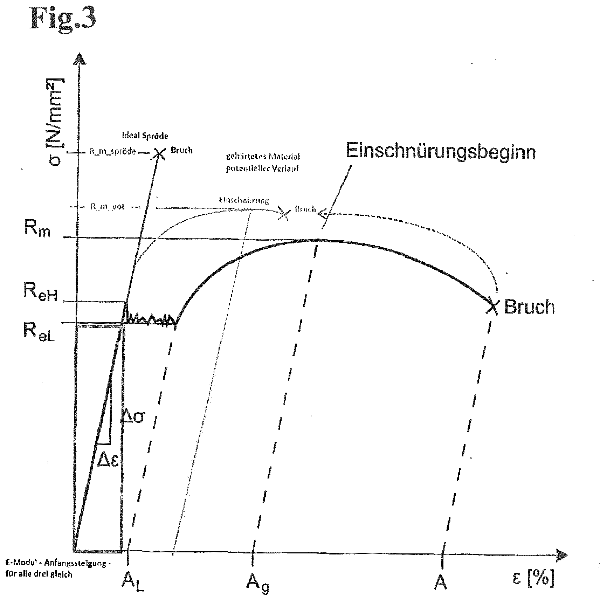

Durch die Härtung wird das Material tendenziell härter und kann mechanisch höher belastet werden. Die Abnahme der Bruchdehnung ist unproblematisch, da die Rotoren innerhalb des linearen Bereichs des Spannung-Dehnungs-Diagramms (Figur 3) belastet werden. Mechanisch kann der Rotor wie zuvor ausgelegt und betrachtet werden. Die behandelten Segmente verändern lediglich die magnetische Permeabilität und verringern dadurch den Streufluss.

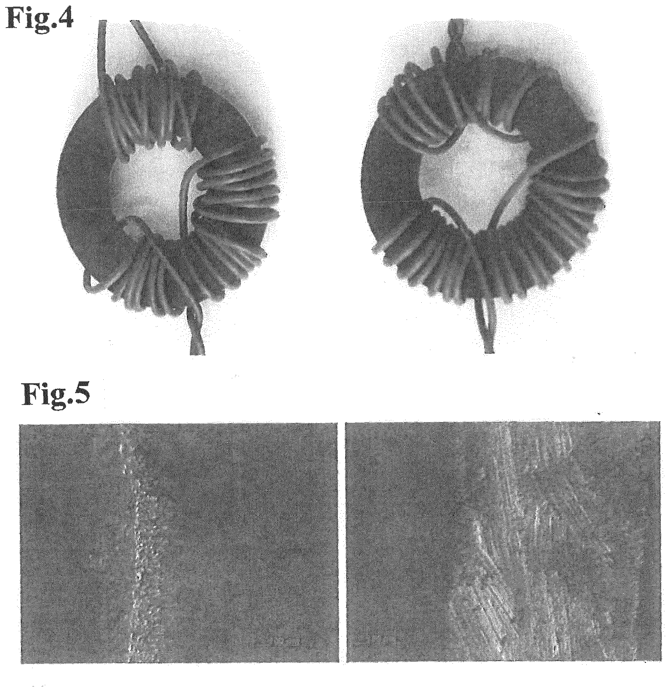

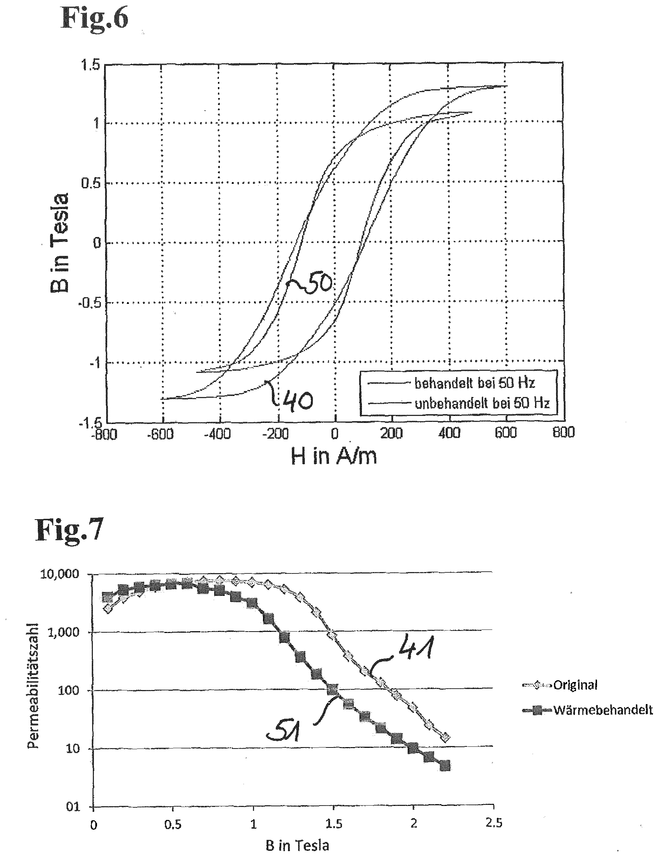

Zur Evaluierung wurde die magnetische Sättigung und Permeabilität zweier Ring-Proben eines Elektroblechs M330-35A vor und nach der Wärmebehandlung vermessen. Die Ring-Proben sind in Figur 4 abgebildet, wobei die linke Ring-Probe unbehandelt ist und die in der Figur 4 rechts dargestellte Ring-Probe gemäß dem Verfahren wärmebehandelt wurde. Das Ergebnis der Messung ist in Figur 6 zu sehen. Der Flussverlauf der unbehandelten Ring-Probe bei 50 Hz ist durch die Hysteresekurve 40 wiedergegeben, der Verlauf der behandelten Ring-Probe mit dem Bezugszeichen 50 gekennzeichnet. Es ist zu erkennen, dass die Sättigungsflussdichte bei der gezeigten Aussteuerung um 0,22 T abgenommen hat. Zum Vergleich sei angemerkt, dass das Minimum der Sättigungsflussdichte von Gusseisen bei ca. 0,8 T - 1 T erreicht wird. Figur 7 zeigt die Permeabilitätszahl in Abhängigkeit der Flussdichte B. In der Figurendarstellung kennzeichnet der Kurvenverlauf 41 den magnetischen Widerstand der unbehandelten Ring-Probe, während die Kurve 51 den magnetischen Widerstand gegenüber der Flussdichte B für die behandelte Ring-Probe wiederspiegelt. Auch hier ist eine spürbare Abnahme der Permeabilität durch die Wärmebehandlung erkennbar.

Die verwendeten Ring-Proben wurden seitlich getrennt und angeschliffen. Das Ergebnis ist in Figur 5 zu sehen, dass mikroskopische Aufnahmen der Oberflächenstruktur zeigt. Das wärmebehandelte Blech (rechte Darstellung der Figur 5) zeigt eine deutliche Veränderung der Struktur.

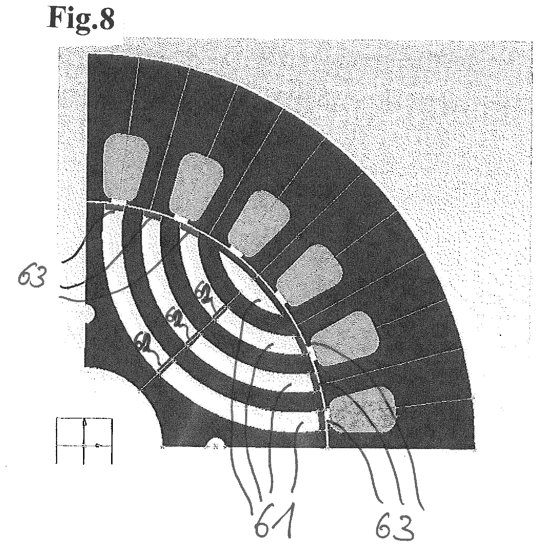

Ausgehend von diesen Materialeigenschaften wurde nun eine Reluktanz Synchronmaschine mit und ohne diese modifizierten Stege in einer Finiten Elemente Simulation berechnet und gegenübergestellt. Die zu behandelnden Rotorstege sind in Figur 8 verdeutlicht. Die Darstellung zeigt einen Rotorquadranten 60 mit insgesamt vier Flusssperren 61 pro ausgeprägtem Rotorpol. Ebenfalls erkennbar ist ein Teilbereich des Stators 70. Die Stege 62 entstehen durch eine mechanische Trennung der innersten Flusssperren entlang der Radialachse. Zudem werden endseitig am Flusssperrenverlauf Stege 63 am Rotorumfang gebildet. Sowohl die Stege 62 als auch die Stege 63 dienen zur mechanischen Festigung der Rotorstruktur, bilden aber nachteilig aufgrund ihrer magnetischen Leitfähigkeit Störpfade.

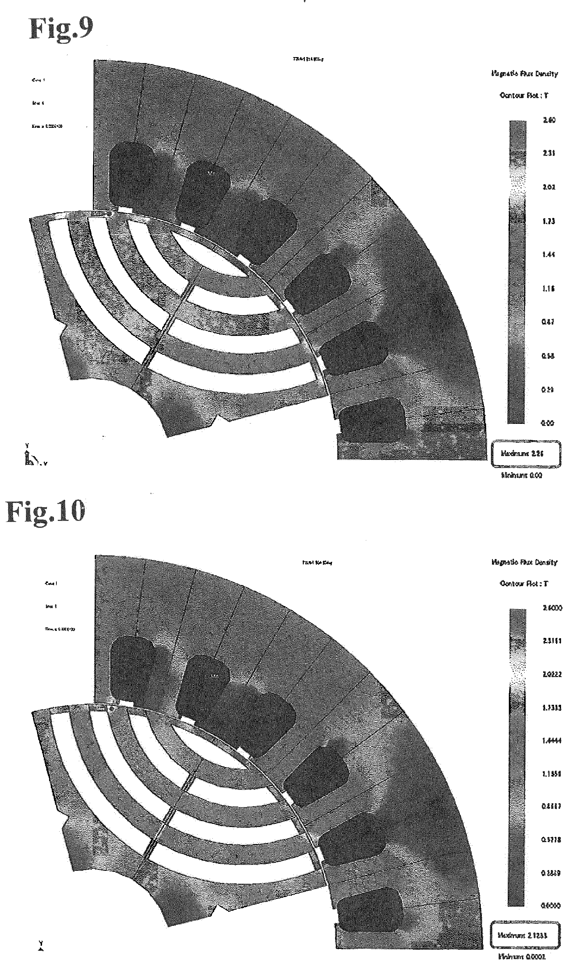

Nachfolgend werden beispielhaft zwei Maschinenquerschnitte mit unterlegter Flussdichteverteilung des identischen Arbeitspunkts in Figur 9 und Figur 10 dargestellt. Figur 9 zeigt die Flussdichteverteilung vor der Wärmebehandlung des Rotors der Figur 8, Figur 10 zeigt die Flussdichteverteilung nach der Wärmebehandlung der Stege 62 und 63. Es lässt sich erkennen, dass die Stege des behandelten Blechs wesentlich geringere Flussdichten aufweisen als vor der Behandlung, was durch die dunklere Farbgebung im Stegbereich deutlich wird. Das resultierende Drehmoment des Rotors steigt erheblich bei konstanter Stromerregung. So wird die Drehmoment-/Leistungsdichte stark gesteigert und die Effizienz erhöht.

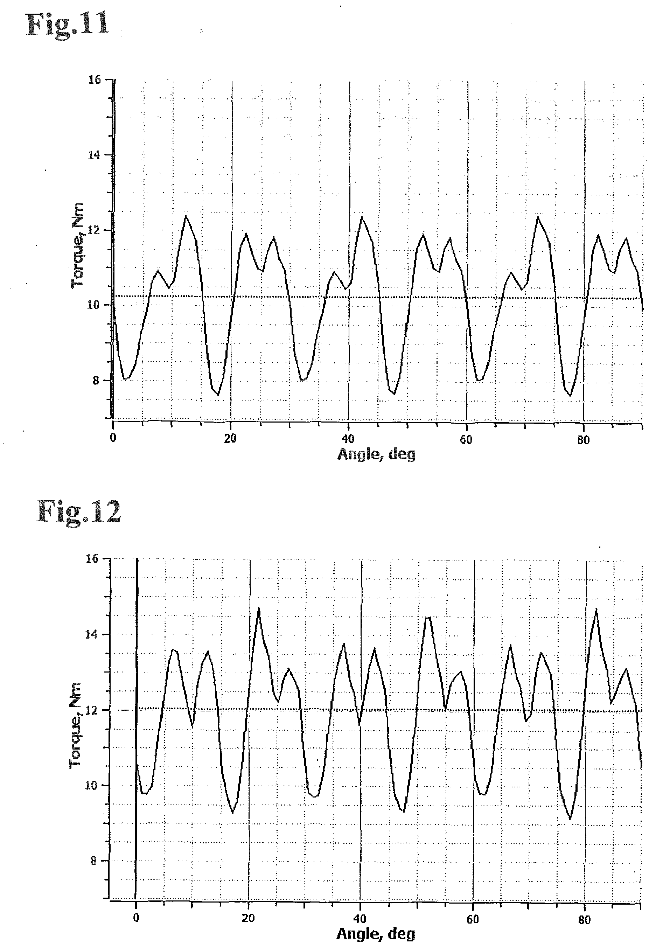

Das Drehmoment der beiden Maschinen ist in den Figuren 11 und 12 über eine viertel Rotordrehung (0°-90°) dargestellt, wobei Figur 11 den Drehmomentverlauf des unbehandelten Rotors und Figur 12 den Verlauf des behandelten Rotors zeigt. Der Mittelwert erhöht sich für die Rotorgeometrie von 10,25 Nm auf 12,02 Nm. Dies entspricht einer Steigerung der mittleren Drehmoment-/Leistungsdichte von mehr als 17 %. Die tatsächliche Höhe der Leistungssteigerung hängt stark von der Geometrie und dem Referenzentwurf der Maschine ab. Für die abgebildete Maschine wäre jedoch eine solche Steigerung ohne Behandlung des Blechs nicht denkbar.

Das erfindungsgemäße Verfahren lässt sich nicht nur bei Rotoren für Synchron-Reluktanzmaschinen anwenden, sondern ebenfalls für andere Maschinentypen, beispielsweise für eine Synchronmaschine bzw. Asynchronmaschine.

Auch bei Synchronmaschinen mit konzentrierten Wicklungen, wie z. B. bei einer 12 Nut/10-poligen Maschine, können auf Grund der Durchflutungsverteilung (MMF) subharmonische Feldkomponenten entstehen. Dies gilt Allgemein für Synchronmaschinen, bei denen das Ergebnis der Gleichung

$$n/(t \cdot m)$$

geradzahlig ist, wobei t der größte gemeinsame Teiler der Nutzahl n und der Polzahl p ist und m die Phasenzahl darstellt. Diese Maschinen erzeugen auf Grund der hohen Eindringtiefe im Material bei niedriger Frequenz hohe Verluste im Rotor. Speziell die Magnetverluste werden hierdurch maßgeblich bestimmt. Zur Vermeidung von Verlusten können Flussbarrieren in den Stator eingearbeitet werden, welche die subharmonischen Feldkomponenten erheblich reduzieren. Ein Verfahren zur Segmentierung und Reduktion von subharmonischen Feldkomponenten ist aus der DE 10 2008 054 284 A1 bekannt.

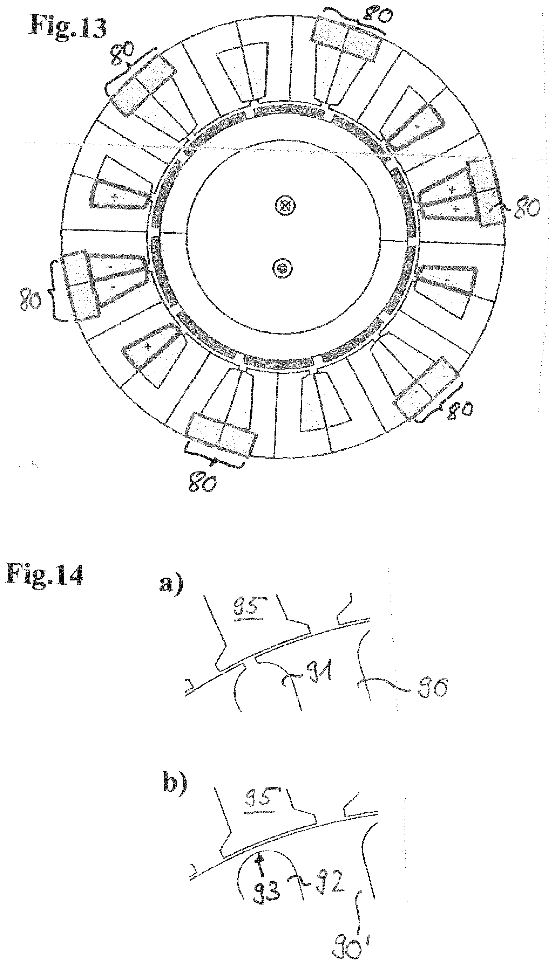

Durch das erfindungsgemäße Verfahren können die zuvor beschriebenen Segmentierungen durch eine Wärmebehandlung ersetzt werden. Die Verbesserung wird sich weniger stark, trotzdem gegenüber einem nicht behandelten Blech erheblich auswirken. Die zu behandelnden Bereiche des Rotors für eine Synchronmaschinen sind in Figur 13 durch die Markierungen 80 gekennzeichnet, insbesondere werden die Rotorbereiche am Umfang behandelt.

Unerwünschte Streuflüsse können ebenfalls bei bestimmten Rotorgeometrien für Asynchronmaschinen auftreten, insbesondere bei Konstruktionen, bei denen die notwendigen Leiter durch Rotornuten aufgenommen werden, die wegen mechanischer und/oder fertigungstechnischer Notwendigkeit geschlossen ausgeführt sind. Zwei Varianten eines derartigen Rotors zeigen die Detailausschnitte der Figuren 14a, 14b. Erkennbar ist ein Ausschnitt des Stators 95 und des Rotors 90, 90*. Figur 14a zeigt eine geöffnete Nut 91, während das Rotormodell 90' der Figur 14b mit geschlossener Nutz 92 konstruiert ist. Die Variante der Figur 14b wird insbesondere bei Maschinen kleinerer Leistungsklassen angewendet, um das Einbringen der Leiter per Spritzgussverfahren mit Aluminium zu vereinfachen. Zudem erhöht eine geschlossene Rotornut 92 die mechanische Festigkeit, welche insbesondere für Maschinen hoher Drehzahl, wie z. B. Spindelantriebe oder Fräsen, notwendig ist.

Elektromechanisch erhöht eine geschlossene Rotornut 92 im Vergleich zu offenen Rotornuten 91 jedoch auch nachteilig den Streufluss des Feldes, insbesondere durch den resultierenden Steg 93, den die geschlossene Nut 92 ausbildet. Durch den Streufluss wird das Kippmoment der Asynchronmaschine nachteilig reduziert. Durch eine thermische Behandlung des magnetischen Materials an den Stegstellen 93 kann der Streufluss minimiert werden, um eine Charakteristik ähnlich dem Designs mit offenen Rotornuten 91 zu erhalten.

**Patentansprüche**

1. Verfahren zur Herstellung eines Rotors (90) für eine elektrische Maschine, wobei der Rotor (90) aus wenigstens einem Elektroblech aufgebaut wird und wenigstens ein Elektroblech bereichsweise thermisch behandelt wird, um dessen magnetische Permeabilität gezielt im behandelten Bereich (80) zu modifizieren, **dadurch gekennzeichnet,**

**dass** zum behandelten Bereich (80) benachbarte Rotorabschnitte während der thermischen Behandlung gekühlt werden.

2. Verfahren nach Anspruch 1, **dadurch gekennzeichnet, dass** das Elektroblech über einen vordefinierten Zeitraum erhitzt wird, um die Kristallstruktur des Elektroblechs im behandelten Bereich (80) zu ändern, und abschließend abgekühlt wird, um einen stabilen Gitterzustand herbeizuführen, insbesondere durch Abfahren eines thermisch definierten Profils.

3. Verfahren nach Anspruch 2, **dadurch gekennzeichnet, dass** das Elektroblech mittels Induktionserwärmung erhitzt wird.

4. Verfahren nach Anspruch 2 oder 3, **dadurch gekennzeichnet, dass** das Elektroblech mittels Flamme erhitzt wird.

5. Verfahren nach einem der Ansprüche 2 bis 4, **dadurch gekennzeichnet, dass** das Elektroblech mittels resitiver Erwärmung durch Zuführen von elektrischer Energie erhitzt wird.

6. Verfahren nach einem der Ansprüche 2 bis 5, **dadurch gekennzeichnet, dass** das Elektroblech mittels direkter oder indirekter Kontaktwärme erhitzt wird.

7. Verfahren nach einem der vorhergehenden Ansprüche, **dadurch gekennzeichnet, dass** der zu behandelnde Rotorbereichs (80) in Abhängigkeit der verwendeten Legierung des Elektrobleches auf eine Mindesttemperatur erhitzt wird, vorzugsweise bei SI-Stahl auf eine Temperatur zwischen 900°C und 1100°C erhitzt wird, um die Kristallstruktur in ein Austenitgitter zu wandeln.

8. Verfahren nach einem der vorhergehenden Ansprüche, **dadurch gekennzeichnet, dass** das Elektroblech mit Flusssperren oder Nuten versehen wird und zumindest ein Teil der dadurch ausgebildeten Stege des Elektrobleches thermisch behandelt wird.

9. Rotor für eine elektrische Maschine, insbesondere Synchronmaschine, Synchronreluktanzmaschine oder Asynchronmaschine, mit wenigstens einem Rotorblech, wobei sich das Rotorblech abschnittsweise durch abweichende magnetische Permeabilität auszeichnet und der Rotor (90) nach einem Verfahren gemäß einem der vorhergehenden Ansprüche 1 bis 8 hergestellt ist.

10. Elektrische Maschine, insbesondere Synchronmaschine, Synchronreluktanzmaschine oder Asynchronmaschine, mit einem Rotor (90) gemäß Anspruch 9.

## Claims

1. A method of manufacturing a rotor (90) for an electrical machine, wherein
the rotor (90) is built up of at least one electric sheet; and at least one electric sheet is thermally treated regionally to modify its magnetic permeability directly in the treated region (80),
**characterized in that**
rotor sections adjacent to the treated region (80) are cooled during the thermal treatment.

2. A method in accordance with claim 1, **characterized in that** the electric sheet is heated over a predefined period of time to change the crystal structure of the electric sheet in the treated region (80) and is subsequently cooled to bring about a stable lattice state, in particular by running through a thermally defined profile.

3. A method in accordance with claim 2, **characterized in that** the electric sheet is heated by means of induction heating.

4. A method in accordance with claim 2 or claim 3, **characterized in that** the electric sheet is heated by means of flame.

5. A method in accordance with one of the claims 2 to 4, **characterized in that** the electric sheet is heated by means of resistive heating by supplying electrical energy.

6. A method in accordance with one of the claims 2 to 5, **characterized in that** the electric sheet is heated by means of direct or indirect contact heat.

7. A method in accordance with one of the preceding claims, **characterized in that** the rotor region (80) to be treated is heated to a minimum temperature in dependence on the used alloy of the electric sheet; with SI steel preferably to a temperature between 900°C and 1100°C to convert the crystal structure into an austenite lattice.

8. A method in accordance with one of the preceding claims, **characterized in that** the electric sheet is provided with stream barriers or grooves; and **in that** at least some of the webs of the electric sheet thereby formed are thermally treated.

9. A rotor for an electrical machine, in particular a synchronous machine, a synchronous reluctance machine or an asynchronous machine, having at least one rotor sheet, wherein the rotor sheet is sectionally **characterized by** a differing magnetic permeability and the rotor (90) is manufactured in accordance with a method in accordance with one of the preceding claims 1 to 8.

10. An electrical machine, in particular a synchronous machine, a synchronous reluctance machine or an asynchronous machine, having a rotor (90) in accordance with claim 9.

## Revendications

1. Procédé de fabrication d'un rotor (90) pour une machine électrique, dans lequel
le rotor (90) est construit à partir d'au moins une tôle magnétique et au moins une tôle magnétique est soumise à un traitement thermique sur certaines parties pour modifier sa perméabilité magnétique de manière ciblée dans la zone traitée (80),
**caractérisé en ce que**
des parties de rotor adjacentes à la zone traitée (80) sont refroidies pendant le traitement thermique.

2. Procédé selon la revendication 1, **caractérisé en ce que**
la tôle magnétique est chauffée pendant une période prédéfinie pour modifier la structure cristalline de la tôle magnétique dans la zone traitée (80), et elle est ensuite refroidie pour aboutir à un état de réseau cristallin stable, en particulier par le déroulement d'un profil thermiquement défini.

3. Procédé selon la revendication 2, **caractérisé en ce que**
la tôle magnétique est chauffée par chauffage par induction.

4. Procédé selon la revendication 2 ou 3, **caractérisé en ce que** la tôle magnétique est chauffée par flamme.

5. Procédé selon l'une des revendications 2 à 4, **caractérisé en ce que** la tôle magnétique est chauffée par chauffage résistif par l'alimentation d'énergie électrique.

6. Procédé selon l'une des revendications 2 à 5, **caractérisé en ce que** la tôle magnétique est chauffée par chaleur de contact directe ou indirecte.

7. Procédé selon l'une des revendications précédentes, **caractérisé en ce que** la zone de rotor (80) à traiter est chauffée à une température minimale en fonction de l'alliage utilisé pour la tôle magnétique, de préférence chauffée à une température entre 900 °C et 1100 °C pour de l'acier SI, pour transformer la structure cristalline en un réseau austénitique.

**8.** Procédé selon l'une des revendications précédentes, **caractérisé en ce que** la tôle magnétique est dotée de barrières de flux ou de rainures et au moins une partie des nervures ainsi formées de la tôle magnétique est soumise à un traitement thermique.

**9.** Rotor pour une machine électrique, en particulier une machine synchrone, une machine synchrone à réluctance ou une machine asynchrone, comprenant au moins une tôle rotorique, dans lequel la tôle rotorique se distingue par une perméabilité magnétique différente par sections et le rotor (90) est fabriqué suivant un procédé selon l'une des revendications précédentes 1 à 8.

**10.** Machine électrique, en particulier machine synchrone, machine synchrone à réluctance ou machine asynchrone, comprenant un rotor (90) selon la revendication 9.

## Fig.1

## Fig.2

# Fig.3

Fig.4

Fig.5

## Fig.6

## Fig.7

**Fig.8**

## Fig.9

## Fig.10

## Fig.11

## Fig.12

**Fig.13**

80

80

80

⊗

⊚

80

80

80

**Fig.14**

a)

95

91

90

b)

95

93

92

90'

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008054284 A1
- US 5684352 A
- WO 2008006719 A1
- WO 2014125104 A